# EUROPEAN PATENT APPLICATION

(11) **EP 4 542 723 A1**
(43) Date of publication of application: **23.04.2025**
(21) Application number: 23892089.6
(22) Date of filing: 20.11.2023
(51) Int. Cl.: H01M 10/44, H01M 10/058, H01M 4/04, H01M 10/052, H01M 4/38

(54) **SECONDARY BATTERY MANUFACTURING METHOD**

(30) Priority: 18.11.2022 KR 20220155730
(71) Applicant: LG Energy Solution, Ltd., Seoul 07335 (KR)
(72) Inventor: KIM, Hyeon-Jin, Daejeon 34122 (KR); HAN, Sueng-Hoon, Daejeon 34122 (KR)
(74) Representative: Goddar, Heinz J.
(86) International application number: PCT/KR2023/018652
(87) International publication number: WO 2024/107027

(57) **Abstract**

A battery manufacturing method according to the present disclosure reduces the time required to perform a battery manufacturing process by reducing the charge and discharge cycles in a battery activation process and adding a constant voltage range.

Additionally, the electrode manufacturing method maximizes the conversion of LiPS that remains due to overvoltage-induced incomplete phase transition, thereby mitigating the overvoltage, leading to uniform distribution of LiPS around a positive electrode, thereby improving the electrochemical performance of the battery such as the capacity of the battery.

## Description

### TECHNICAL FIELD

The present disclosure relates to a method for manufacturing a secondary battery, and more particularly, to a first cycle discharge method in a battery activation process.

The present application claims priority to Korean Patent Application No. 10-2022-0155730 filed on November 18, 2022 in the Republic of Korea, the disclosure of which is incorporated herein by reference.

### BACKGROUND ART

Recently, there is increasing attention paid to energy storage technology. With an extended range of applications as sources of energy for mobile phones, camcorders, laptop computers and electric vehicles, ever-growing research and development efforts are devoted to electrochemical devices including secondary batteries. In the field of electrochemical devices, attention is directed to the development of secondary batteries that are rechargeable, and more recently, in the battery development, to improve capacity density and specific energy, research and development activities for new electrode and battery design are being conducted.

Among secondary batteries, lithium-sulfur batteries include lithium negative electrodes having light weight and sulfur positive electrodes having high discharge capacity and are attracting attention as high energy density secondary batteries.

In lithium-sulfur batteries, sulfur is a starting material in reaction during discharging, and S₈ of a cyclic structure is the starting material. During discharging, through the linear structure of continuous reduction reaction, lithium polysulfide (LiPS: Li₂S₈, Li₂S₆, Li₂S₅, Li₂S₄) leaks out into the electrolyte and migrates from the positive electrode to the negative electrode, and in turn, is reduced into polysulfide of lower monomer. The negatively charged polysulfide dissolves in a liquid organic solvent and moves to the negative electrode due to a chemical potential and a concentration gradient of the positive electrode and the negative electrode. Finally, it is reduced into an insoluble material Li₂S (S₈ + 16Li → 8Li₂S). During charging, Li₂S is oxidized and converted back to S₈ in reverse. This is called "shuttle" mechanism. In lithium-sulfur batteries having this mechanism feature, an activation process before cycling is a crucial process for uniform distribution of LiPS in the electrolyte around the positive electrode to prevent additional resistance variables in the cycle life test. In this process, lithium polysulfide (LiPS) shuttling affects the overall performance degradation of the cell and especially, has severe influence on negative electrode degradation. During discharging, sulfur is reduced into lithium polysulfide (Li₂Sₙ, where 4<n<8), and the intermediate product leaks out and diffuses into the electrolyte. The shuttle effect of the lithium polysulfide on the surface of the negative electrode of lithium metal leads to capacity fading, and some of the lithium polysulfide are reduced into lithium sulfide (Li₂S₂, Li₂S) that is nonconductive, leading to loss of active materials and migration inhibition of lithium ions, resulting in C-rate characteristics degradation. The side reaction leads to poor Coulombic efficiency and instability of the negative electrode, resulting in performance degradation of the battery. In this circumstance, there is a need for a new activation process of lithium-sulfur batteries in the battery fabrication.

### SUMMARY

### Technical Problem

To solve the above-described problem, the present disclosure is directed to providing a method for manufacturing a lithium-sulfur battery, and more particularly, to a battery manufacturing method including a new battery activation process. It is apparent that these and other objectives and advantages of the present disclosure may be realized by the means or methods set forth in the appended claims and a combination thereof.

### Technical Solution

A first aspect of the present disclosure relates to a method for manufacturing a lithium-sulfur battery, and the method includes (S10) manufacturing a preliminary electrode including an electrode assembly and an electrolyte; and (S20) activating the preliminary electrode, wherein the electrode assembly includes a positive electrode, a negative electrode and a separator between the positive electrode and the negative electrode, the positive electrode includes a positive electrode active material including sulfur, in the (S10), the electrode assembly gets wet by the electrolyte, the (S20) comprises discharging the preliminary electrode, and the discharging is performed by constant current (CC) discharging and constant voltage (CV) discharging in a sequential order.

According to a second aspect of the present disclosure, in the first aspect, the CC discharging in the (S20) is performed until a preset end-of-discharge voltage is reached, and the end-of-discharge voltage is set in a range between 1.3V and 1.8V.

According to a third aspect of the present disclosure, in the second aspect, the CC discharging in the (S20) is performed at a C-rate set in a range between 0.05 and 2 until the preset end-of-discharge voltage is reached.

According to a fourth aspect of the present disclosure, in any one of the second or third aspect, the CV discharging is performed until a remaining current of the battery reaches 0 mAh at the preset end-of-discharge voltage.

According to a fifth aspect of the present disclosure, in any one of the first to fourth aspects, before the (S20) is performed, the preliminary electrode is uncharged and undischarged, and the (S20) comprises applying initial discharging to the preliminary electrode.

According to a sixth aspect of the present disclosure, in any one of the second to fifth aspects, before the (S20) is performed, the preliminary electrode is uncharged and undischarged, and the (S20) comprises discharging the preliminary electrode only one time.

According to a seventh aspect of the present disclosure, in any one of the first to sixth aspects, the discharging in the (S20) is performed less than six times.

According to an eighth aspect of the present disclosure, in any one of the first to seventh aspects, the CC discharging in the (S20) is performed at a C-rate in a range between 0.05 and 2.00.

According to a ninth aspect of the present disclosure, in any one of the first to eighth aspects, the discharging in the (S20) is performed in a CC mode until the preset end-of-discharge voltage.

According to a tenth aspect of the present disclosure, in any one of the first to ninth aspects, the discharging in the (S20) is performed at a C-rate in a range between 0.50 to 1.00.

According to an eleventh aspect of the present disclosure, in any one of the first to tenth aspects, the (S20) is performed in an environment in which the preliminary electrode is subjected to pressure.

According to a twelfth aspect of the present disclosure, in the eleventh aspect, the pressure applied is equal to or higher than an atmospheric pressure.

According to a thirteenth aspect of the present disclosure, in any one of the first to twelfth aspects, the (S20) is performed at a temperature in a range between 15°C and 40°C.

According to a fourteenth aspect of the present disclosure, in any one of the first to thirteenth aspects, the method further includes, after the (S10) is performed and before the (S20) is performed, aging by keeping the preliminary electrode under an atmosphere of from 15°C to 40°C.

According to a fifteenth aspect of the present disclosure, in any one of the first to fourteenth aspects, the (S20) comprises charging between the discharging and the discharging, and the charging is performed by CC charging and CV charging in a sequential order.

### Advantageous Effects

The battery manufacturing method according to the present disclosure may reduce the time required to perform the battery manufacturing process by reducing the charge and discharge cycles in the battery activation process and adding the constant voltage (CV) range. Additionally, the battery manufacturing method may maximize the conversion of LiPS that remains due to overvoltage-induced incomplete phase transition, thereby mitigating the overvoltage, leading to uniform distribution of LiPS around the positive electrode, thereby improving the electrochemical performance of the battery such as the capacity of the battery.

### BRIEF DESCRIPTION OF THE DRAWINGS

The accompanying drawings illustrate exemplary embodiments of the present disclosure and together with the detailed description, serve to provide a further understanding of the technical aspect of the present disclosure, and the present disclosure should not be interpreted as being limited to the drawings. In the drawings, for clarity of description, the shape, size, scale or proportion of the elements may be exaggerated for emphasis.
FIG. 1 shows the comparison of high rate discharge characteristics between batteries according to Example and Comparative Example.
FIG. 2 shows the comparison of Coulombic efficiency characteristics between batteries according to Example and Comparative Example.
FIG. 3 shows the comparison of power density as a function of state of charge (SOC) range between batteries according to Example and Comparative Example.

### DETAILED DESCRIPTION

Hereinafter, the present disclosure will be described in detail. The terms or words used in the present disclosure and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation. Therefore, the embodiments described herein and illustrations shown in the drawings are provided to describe the exemplary embodiments of the present disclosure, but not intended to fully describe the technical aspect of the present disclosure, so it should be understood that a variety of other equivalents and modifications could have been made thereto at the time the application was filed.

The term "comprise", "include" or "have" when used in the present disclosure, specifies the presence of stated elements, but does not preclude the presence or addition of one or more other elements, unless the context clearly indicates otherwise.

Additionally, the terms "about" and "substantially" as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.

In the present disclosure, A and/or B refers to either A or B or both.

Certain terms as used herein are for convenience and are not intended to limit the scope of the present disclosure. The words 'right', 'left', 'upper' and 'lower' indicate directions in the drawings to which reference is made. The terms 'inward' and 'outward' indicate directions facing toward and away from the geographical center of the stated device, system and their elements, respectively. The terms 'front', 'rear', 'up', 'down' and their related words and phrases indicate locations and orientations in the drawings to which reference is made and are not intended to be limiting. These terms include the aforementioned words, their derived words and words of similar meanings.

### <Method for manufacturing secondary battery>

The present disclosure relates to a method for manufacturing a secondary battery, specifically a lithium-sulfur secondary battery.

Specifically, the method for manufacturing the lithium-sulfur secondary battery according to the present disclosure includes manufacturing a preliminary electrode including an electrode assembly and an electrolyte, and activating the preliminary electrode. The battery manufacturing method may include a degassing step to remove gases produced in the activation step. The electrode assembly includes a positive electrode, a negative electrode and a separator between the positive electrode and the negative electrode, the positive electrode includes a positive electrode active material including sulfur, and before the activation step is performed, the electrode assembly gets wet by the electrolyte. Additionally, in the present disclosure, the activation step in the battery manufacturing method includes a step of discharging the preliminary electrode, and the discharging is performed by constant current (CC) discharging and constant voltage (CV) discharging in a sequential order.

As described above, in the activation process, the CC-CV discharging step may maximize the conversion of LiPS that remains due to overvoltage-induced incomplete phase transition. Accordingly, it may be possible to achieve higher capacity and longer life performance than the existing lithium-sulfur batteries. Additionally, it may be possible to reduce the time required to perform the process and improve safety.

Subsequently, each step of the method for manufacturing the lithium-sulfur battery according to the present disclosure will be described in detail.

### <S10 Manufacturing of preliminary electrode>

First, the preliminary electrode including the electrode assembly and the electrolyte is manufactured (S10).

In the present disclosure, the preliminary electrode refers to a battery that did not finish a formation process. In the present disclosure, the formation process may refer to a battery production preparation process including activation and degassing processes after electrolyte solution injection.

The electrode assembly includes the negative electrode, the positive electrode and the separator the negative electrode and the positive electrode. The negative electrode, the positive electrode and the separator will be described in detail below.

The method for manufacturing the secondary battery of the present disclosure includes a step of wetting the electrode assembly with the electrolyte solution. The electrode assembly may be activated by discharging as described below after it gets wet by the electrolyte solution. The electrolyte solution may include an organic solvent and a lithium salt. The organic solvent and the lithium salt will be described in detail below.

The wetting is performed to make the electrode assembly adequately wetted by the electrolyte solution, and enhance the activation by charging and discharging of the electrode assembly. The wetting with the electrolyte solution may be performed, for example, by placing the electrode assembly in a battery case, injecting the electrolyte solution into the battery case, and then staying still at a predetermined temperature for a predetermined time. For example, after the injection of the electrolyte solution, it may stay still for 12 hours to 100 hours, and more preferably 24 hours to 75 hours to allow the electrolyte solution to permeate the electrode assembly (aging step).

The wetting of the electrode assembly may be performed at 15°C to 30°C, and more specifically 20°C to 27°C, and within the above-described range, it may be possible to improve the wetting of the electrode assembly, and prevent dendrite formation in the negative electrode due to too high temperature and the consequential low voltage risk.

Meanwhile, in the present disclosure, the electrode assembly may be manufactured by methods well known in the art and the type of the electrode assembly is not limited to a particular one, and for example, include a winding type, a stack type or a stack/folding type.

The winding-type electrode assembly is manufactured by coating an electrode active material on a current collector, drying, pressing, tailoring into a band shape of a desired width and length, interposing the separator between the negative electrode and the positive electrode and spirally winding.

The stack-type electrode assembly is a structure in which positive and negative electrode unit cells are stacked in a sequential order, and is easy to obtain a prismatic shape, but the manufacturing process is complex and when impacts are applied, the electrode is dislocated, causing short circuits.

The stack/folding-type electrode assembly is an electrode assembly of hybrid advanced structure of winding type and stack type, and is a structure in which a full cell or a bi-cell of a predetermined unit size is folded using a long continuous separation film. The electrode assembly of this structure is a combined structure of the folding type and the stack.

The 'full cell' is a unit cell having a unit structure of positive electrode/separator/negative electrode, in which the positive electrode and the negative electrode are disposed on two sides of the cell. The full cell may include a cell of the most basic structure, for example, a positive electrode/separator/negative electrode cell and a positive electrode/separator/negative electrode/separator/positive electrode/separator/negative electrode cell. To fabricate an electrochemical cell using the full cell, a plurality of full cells is stacked such that the positive electrode and the negative electrode face each other and a separation film is interposed between them.

The 'bi-cell' is a unit cell in which the same electrode is disposed on two sides of the cell like a unit structure of positive electrode/separator/negative electrode/separator/positive electrode and a unit structure of negative electrode/separator/positive electrode/separator/negative electrode. To fabricate an electrochemical cell using the bi-cell, a plurality of bi-cells is stacked such the bi-cell (positive bi-cell) of positive electrode/separator/negative electrode/separator/positive electrode structure and the bi-cell (negative bi-cell) of negative electrode/separator/positive electrode/separator/negative electrode structure face each other and a separation film is interposed between them. In some cases, a larger number of bi-cells may be stacked.

Meanwhile, in an embodiment of the present disclosure, the degassing process may be performed to remove gases generated inside the battery before the activation process is performed after the electrolyte solution wetting process has been performed.

### <S20 Activation of preliminary electrode>

The activation process is performed on the obtained preliminary electrode. The term 'activation' as used herein refers to a process of providing electrical properties to the positive electrode and the negative electrode by supplying a predetermined amount of electricity to the electrode assembly or the battery cell that does not exhibit electrical properties. The activation process may induce formation of a solid electrolyte interphase (SEI) layer, charging of a portion of the battery capacity and lithiation of the negative electrode when a carbon-based negative electrode active material is used.

Meanwhile, in the present disclosure, the preliminary electrode is in an uncharged and undischarged condition before the activation process is performed after it gets wet by the electrolyte solution. More preferably, in the present disclosure, the activation process applies initial discharge to the preliminary electrode.

In the present disclosure, the activation process may be performed by discharging the preliminary electrode prepared in the step (S10) only one time.

Alternatively, the activation process may be performed by repeating the charge and discharge after the initial discharging process, and in this instance, the activation process is preferably performed by discharging less than 6 times.

In an exemplary embodiment of the present disclosure, the discharging is performed by CC discharging and CV discharging in a sequential order. When the discharging is performed multiple times, for example, two or more times in the activation process, at least one discharging is performed by CC discharging and CV discharging in a sequential order. In this instance, the initial discharging is preferably performed by CC discharging and CV discharging in a sequential order. In another embodiment, all discharging in the activation step may be performed by CC discharging and CV discharging in a sequential order.

If CV discharging is first performed, an instantaneous overcurrent may occur in the lithium-sulfur battery, causing damage to the cell, and a significant amount of active materials are left unreacted, and in the present disclosure, it is preferred to perform CC discharging and CV discharging in a sequential order.

The CC discharging may be performed until a preset end-of-discharge voltage is reached, and the end-of-discharge voltage may be set in a range between 1.3V and 1.8V.

In the step (S20), the CC discharging may be performed at a C-rate set in a range between 0.05 C and 2.00 C, or between 0.50 C and 1.00 C until the preset end-of-discharge voltage is reached.

The CV discharging may be performed until an end-of-charge current is reached at the preset end-of-discharge voltage. In a specific embodiment, at the end-of-charge current, i.e., when the remaining current of the battery is 0 mAh, the discharging may be terminated.

In another embodiment, the CV mode may be performed at the end-of-discharge voltage of 1.3V to 1.8V for about 20 minutes or more, about 1 hour or more, about 2 hours or more, or about 4 hours or more. Meanwhile, the CV discharging time is within a range in which overdischarging does not occur, and is preferably equal to or less than 6 hours.

The activation process of the battery gets started by the discharging and when the discharging is performed in a CC-CV mode, inactive LiPS that remains due to overvoltage-induced incomplete phase transition may be activated, which increases the battery capacity. Additionally, the activation process may be simplified by the above-described discharging, thereby reducing the process time, compared to the activation process performed by the existing charging-discharging sequence. Furthermore, it may be possible to ensure the similar level of life characteristics to batteries manufactured by the existing activation process.

Meanwhile, in an embodiment of the present disclosure, the step (S20) may be performed in an environment in which the preliminary electrode is subjected to pressure. The pressure applied is preferably pressures that are equal to or higher than the atmospheric pressure. The 'atmospheric pressure' as used herein refers to pressure in a state in which any pressure applying or reducing device is applied. For example, the atmospheric pressure may be about 1 atm that is the normal atmospheric condition. The applying of the pressure is used to perform a safety process, and specifically, may be performed by placing the wetted electrode assembly between two press jigs or press plates, and applying the pressure to the wetted electrode assembly.

The pressure applied may be, for example, in a range between 1 atm and 15 atm, and more specifically, between 4 atm and 10 atm. When the pressure applied lies in the above-described pressure range, it may be possible to prevent the volume expansion of the negative electrode and shape change of the negative electrode, thereby achieving stable and uniform intercalation of lithium into the negative electrode. Meanwhile, the activation process may be performed at 15°C to 40°C, or 20°C to 30°C. Within the above-described range, it may be possible to improve the mobility of lithium, thereby preventing partial lithium intercalation into the electrode, and achieving uniform charging.

Meanwhile, in the present disclosure, in (S20), the charging process may be performed between the discharging processes, and when the charging process is performed, the charging may be performed by CC charging and CV charging in a sequential order.

The charging may be performed by charging the electrode assembly so that the remaining capacity (state of charge (SOC)) of the electrode assembly is equal to or larger than 40%. Specifically, in order to prevent the volume expansion of the negative electrode active material (for example, a silicon-based active material) and shape change of the negative electrode during charging, and prevent overvoltage in the negative electrode due to overcharging and its consequential potential drop of the negative electrode, causing lithium reduction and plating, the charging may be performed by charging the electrode assembly so that the remaining capacity of the electrode assembly is 60% to 90%, and more preferably, 70% to 85%.

### <S30 Degassing>

In an embodiment of the present disclosure, after the activation process is performed, the degassing process may be performed to remove the remaining gases in the battery.

Gases may be produced as by-products due to SEI layer formation after the activation of the battery and irreversible capacity. Accordingly, to use the activated secondary battery, the process of removing the by-products may be performed, and the secondary battery may be made available through the degassing process. The step of removing gases may be performed using any method commonly used in the field of secondary batteries without limitation. For example, the step of removing gases may be performed by partially opening the case accommodating the electrode assembly, followed by sealing.

### <Electrode assembly>

In an embodiment of the present disclosure, the electrode assembly may include the negative electrode, the positive electrode and the separator between the negative electrode and the positive electrode.

The electrode assembly is placed in the battery case together with the electrolyte solution and the case is sealed. In an embodiment of the present disclosure, the battery case is made of a metal, and may be a prismatic case or a cylindrical case.

The electrode assembly includes the negative electrode, the positive electrode and the separator, and the negative electrode and the positive electrode may be stacked with the separator interposed therebetween. The electrode assembly may be manufactured by any known method. Additionally, the electrode assembly is not limited to a particular type and may include any type of electrode assembly having a structure including the negative electrode, the positive electrode and the separator between the negative electrode and the positive electrode, for example, a jelly-roll-type, stack-type or stack/folding-type structure.

### <Negative electrode>

In a specific embodiment of the present disclosure, the negative electrode may include a current collector and a negative electrode active material layer on the surface of the current collector. According to a specific embodiment of the present disclosure, the negative electrode active material layer includes a negative electrode active material, and if necessary, may further include a binder and a conductive material.

In an embodiment of the present disclosure, the negative electrode active material may include at least one selected from the group consisting of lithium metals; metal composite oxide such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Groups 1, 2 and 3 elements in the periodic table, halogen; 0<x≤1; 1≤y≤3; 1≤z≤8); lithium alloys of lithium and other metals; silicon-based alloys; tin-based alloys; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymer such as polyacetylene; Li-Co-Ni-based materials; titanium oxide; lithium titanium oxide; carbon-based materials. The other metals in the lithium alloys may include at least one selected from Al, Mg. Meanwhile, the carbon-based material may include at least one selected from the group consisting of crystalline artificial graphite, crystalline natural graphite, amorphous hard carbon, low crystallinity soft carbon, carbon black, acetylene black, graphene and fibrous carbon. Preferably, in the present disclosure, the negative electrode active material may be lithium metals or lithium alloys.

In an embodiment of the present disclosure, the negative electrode active material may include lithium metals or alloys of lithium and other metals, and in this instance, the negative electrode active material layer may be prepared in the form of a foil including the metals and laminated with the current collector to form the negative electrode. The lamination may be performed by applying the pressure, and the current collector and the foil may be heated at temperatures that are equal to or higher than room temperature when the pressure is applied. Additionally, the lamination may be performed by roll pressing.

In an embodiment of the present disclosure, the negative electrode current collector may include negative electrode current collectors commonly used in the corresponding technical field. The negative electrode current collector may include, for example, copper, stainless steel, aluminum, nickel, titanium, sintered carbon, copper or stainless steel treated with carbon, nickel, titanium or silver on the surface, aluminum-cadmium alloys, etc. The negative electrode current collector may be usually 3 µm to 500 µm in thickness, and in the same way as the positive electrode current collector, the negative electrode current collector may have microtexture on the surface to enhance the bonding strength of the negative electrode active material. For example, the current collector may come in various forms, for example, a film, a sheet, a foil, a net, a porous body, a foam, a nonwoven, etc. For example, when a metal foil-type current collector is used, the current collector may be 1 µm to 20 µm in thickness.

### <Positive electrode>

The lithium ion secondary battery is a lithium-sulfur battery. The positive electrode according to the present disclosure includes a current collector and a positive electrode active material layer on at least one surface of the current collector.

The current collector may include any current collector that has electrical conductivity and is used to collect an electrical current, commonly used in the corresponding technical field. For example, the positive electrode current collector may include stainless steel, aluminum, nickel, titanium, sintered carbon or aluminum or stainless steel treated with carbon, nickel, titanium or silver on the surface. The positive electrode current collector may be usually 3 µm to 500 µm in thickness, and the positive electrode current collector may have microtexture on the surface to increase the adhesion strength of the positive electrode active material. The positive electrode current collector may come in various forms, for example, a film, a sheet, a foil, a net, a porous body, a foam, a nonwoven, etc.

In an embodiment of the present disclosure, the positive electrode active material layer includes a positive electrode active material, a conductive material and a binder material. The positive electrode active material layer may include 80 to 97 wt% of the positive electrode active material, 2 to 10 wt% of the conductive material and 2 to 10 wt% of the binder material based on the total weight of the positive electrode active material, the conductive material and the binder material.

In the present disclosure, the positive electrode active material includes a sulfur-carbon composite. Preferably, the positive electrode active material may include the sulfur-carbon composite in an amount of 80 wt% or more, preferably 90 wt% or more based on 100 wt% of the positive electrode active material, and more preferably, the positive electrode active material may consist of the sulfur-carbon composite. Additionally, the sulfur content is preferably 70 wt% or more based on 100 wt% of the sulfur-carbon composite.

In an embodiment of the present disclosure, the sulfur-carbon composite may be a composite into which sulfur and a carbon material are simply mixed or may have a coated or loaded core-shell structure. The coated core-shell structure may be a coating of one of the sulfur and the carbon material on the other, and for example, the carbon material surface may be covered with the sulfur or vice versa. The carbon material has a porous structure having pores inside of the body and on the surface, and in particular, sulfur filled in the pores of the carbon material. The sulfur-carbon composite may include any type of sulfur-carbon composite that satisfies a ratio of amounts of the sulfur based compound and the carbon material as described below and the present disclosure is not limited thereto. Meanwhile, in the present disclosure, the sulfur content is preferably 70 wt% or more based on the total weight of the positive electrode active material.

Since the sulfur is not electrically conductive itself, the sulfur is used in combination with the carbon material.

In an embodiment of the present disclosure, the sulfur may include at least one selected from the group consisting of inorganic sulfur (S₈), Li₂Sₙ (n≥1), disulfide compounds such as 2,5-dimercapto-1,3,4-thiadiazole, 1,3,5-trithiocyanuic acid, organic sulfur compounds and carbon-sulfur polymer ((C₂Sₓ)ₙ, x=2.5 to 50, n≥2). Preferably, the sulfur may include inorganic sulfur (S₈).

The carbon material has a porous structure including a plurality of irregular pores on the surface and inside, acts as a host to provide skeleton for uniform and stable immobilization of sulfur, and increases low electrical conductivity of sulfur for smooth electrochemical reaction. In particular, in the sulfur-carbon composite, when the carbon material that acts as a sulfur host has a large BET specific surface area and a proper particle size (D₅₀), it may be possible to achieve high sulfur loading, low irreversible capacity and high energy density, thereby increasing sulfur availability in the electrochemical reaction.

In an embodiment of the present disclosure, the BET specific surface area of the carbon material may be a minimum of 100 m²/g and a maximum of 3000 m²/g. Along with this or independently of this, the carbon material may have the particle size (D₅₀) of primary particles in a range between 1 µm and 50 µm.

When the BET specific surface area and the particle size (D₅₀) of the carbon material satisfy the above-described ranges, it may be possible to achieve uniform distribution of sulfur inside the carbon material and on the surface of the carbon material, and reduce the irreversible capacity, thereby increasing the electrochemical reactivity of sulfur. Additionally, the use of the carbon material improves the electrochemical reactivity, stability and electrical conductivity of the sulfur-carbon composite, thereby improving the capacity and life characteristics of the lithium-sulfur battery and ensuring the optimal charge·discharge performance despite sulfur loss or volume change during charging·discharging.

When the particle size (D₅₀) of primary particles is larger than 50 µm, lithium ions have difficulty in moving into the particles due to the limited movement of a material, which makes it difficult to efficiently use sulfur disposed at the center of carbon. When the particle size (D₅₀) of primary particles is smaller than 1 µm, it requires a large amount of solvents to prepare an electrode slurry, so it is difficult to increase the solids content, thereby failing to ensure adequate pores between particles, resulting in low output.

In the sulfur-carbon composite of the present disclosure, the carbon material used as a sulfur host may be, in general, manufactured by carbonizing precursors of various carbon materials.

Meanwhile, in an embodiment of the present disclosure, the pores of the carbon material may have the diameter in a range between 0.5 nm and 200 nm on the basis of the longest diameter. The shape of the carbon material may be spherical, rod-like, needle-like, platy, tubular or bulky, and may include, without limitation, any shape commonly used in lithium-sulfur secondary batteries.

The carbon material may include any carbon material having porous and conductive properties commonly used in the corresponding technical field. For example, the carbon material may include at least one selected from the group consisting of graphite; graphene; carbon black including Denka black, acetylene black, Ketjen black, channel black, furnace black, lamp black, thermal black; carbon nanotubes (CNT) including single-walled carbon nanotubes (SWCNT), multi-walled carbon nanotubes (MWCNT); carbon fibers including graphite nanofibers (GNF), carbon nanofibers (CNF), activated carbon fibers (ACF); graphite including natural graphite, artificial graphite, expandable graphite; carbon nanoribbons; carbon nanobelts, carbon nanorods and activated carbon.

In the sulfur-carbon composite according to the present disclosure, the sulfur may be disposed on at least one surface of the inside of the pores of the carbon material or the outer surface of the carbon material, and in this instance, the sulfur may be present in an area of less than 100% of all the inner and outer surface of the carbon material, preferably 1 to 95%, and more preferably 60 to 90%. When the sulfur is present on the surface of the carbon material within the above-described range, it may be possible to obtain the maximum effect in terms of electron transport area and electrolyte wetting. Specifically, when the sulfur is impregnated over the surface of the carbon material uniformly to a small thickness at the area of the above-described range, it may be possible to increase the electron transport contact area during charging·discharging. When the sulfur is present in the area corresponding to 100% of the entire surface of the carbon material, the carbon material is completely covered with sulfur, resulting in poor electrolyte wetting and low contact with the conductive material included in the electrode, thereby failing to accept electrons and participate in reaction.

### <Manufacture of sulfur-carbon composite>

Additionally, in an embodiment of the present disclosure, the sulfur-carbon composite may be obtained by the following manufacturing method.

The method for manufacturing the sulfur-carbon composite according to the present disclosure is not limited to a particular one and may include any method commonly used in the corresponding technical field, and the sulfur-carbon composite may be manufactured by a composite manufacturing method including (S1) mixing the carbon material with sulfur, and (S2) forming a composite.

The step (S1) of mixing may be performed using a stirrer commonly used in the corresponding technical field to improve the mixing between the sulfur and the carbon material. In this instance, the mixing time and speed may be selectively adjusted according to the amounts of the raw materials and conditions.

The step (S2) of forming the composite is not limited to a particular method in the present disclosure and may use any method commonly used in the corresponding technical field. The composite manufacturing method commonly used in the corresponding technical field may include, for example, a dry process or a wet process such as spray coating. For example, the mixture of the sulfur and the carbon material obtained after mixing may be thermally treated to uniformly coat the molten sulfur on the inside of the carbon material and the surface of the carbon material. Meanwhile, in an embodiment of the present disclosure, before the thermal treatment, the mixture of the sulfur and the carbon material may be milled by ball milling. In an embodiment of the present disclosure, the thermal treatment may be performed in the temperature condition of 120 to 160 °C for about 20 minutes to 24 hours, and a heater such as an oven may be used.

Since the sulfur-carbon composite manufactured through the above-described manufacturing method has large specific surface area, high sulfur loading and improved availability of sulfur, it may be possible to improve the electrochemical reactivity of sulfur and improve the accessibility and contact of the electrolyte solution, thereby improving the capacity and life characteristics of the lithium-sulfur battery.

In an embodiment of the present disclosure, the positive electrode active material may consist of the sulfur-carbon composite. In addition to the sulfur-carbon composite, the positive electrode active material may further include at least one additive selected from transition metal elements, Group IIIA elements, Group IVA elements, sulfur compounds of these elements and alloys of these elements and sulfur.

In a specific embodiment of the present disclosure, the positive electrode active material layer may include lithium transition metal composite oxide represented by the following [Chemical formula 1].

[Chemical Formula 1] LiₐNi_{b}Co_{c}M¹_{d}M²ₑO₂

In the above Chemical Formula 1, M¹ may be Mn, Al or a combination thereof, and preferably Mn, or Mn and Al.

The M² may be at least one selected from the group consisting of Zr, W, Y, Ba, Ca, Ti, Mg, Ta and Nb, preferably at least one selected from the group consisting of Zr, Y, Mg, and Ti, and more preferably Zr, Y or a combination thereof. The M² is optional, but when it is included in an optimal amount, it may play a role in promoting the particle growth during sintering and improving the crystal structure stability.

### Conductive material

The conductive material is used to provide conductivity to the negative electrode, and may include, without limitation, any conductive material having the ability to conduct electrons without causing a chemical change in the corresponding battery. Specific examples of the conductive material may include graphite such as natural graphite or artificial graphite; carbon-based materials such as carbon black, acetylene black, Ketjen black, channel black, furnace black, lamp black, thermal black, carbon fibers, carbon nanotubes; metal powders or metal fibers of copper, nickel, aluminum, silver; conductive whiskers such as zinc oxide and potassium titanate; conductive metal oxide such as titanium oxide; or conductive polymer such as polyphenylene derivatives, used singly or in combination. The conductive material may be typically included in an amount of 1 to 30 wt%, preferably 1 to 20 wt%, and more preferably 1 to 10 wt% based on the total weight of the negative electrode active material layer.

### Binder material

The binder material plays a role in holding the positive electrode active material particles together and improving the adhesion strength between the positive electrode active material and the positive electrode current collector, and specific examples of the binder material may include polyvinylidene fluoride (PVDF), a vinylidene fluoride-hexafluoropropylene copolymer (PVDF-co-HFP), polyvinylalcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylenepropylene-diene monomer (EPDM) rubber, sulfonated-EPDM, styrene butadiene rubber (SBR), fluoro rubber, or a variety of copolymers thereof, used singly or in combination.

### Separator

The separator is disposed between the negative electrode and the positive electrode in the electrode assembly. The separator may separate the negative electrode from the positive electrode and provide movement channels of lithium ions, and may include, without limitation, any type of separator commonly used in lithium secondary batteries. Specifically, the separator may include a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer or a two or more layer stack structure thereof. Additionally, commonly used porous nonwoven fabrics, for example, nonwoven fabrics made of high melting point glass fibers, polyethyleneterephthalate fibers may be used. Additionally, coated separators having coating layers including ceramics or polymers may be used to ensure heat resistance or mechanical strength.

### Battery

Another aspect of the present disclosure relates to a secondary battery including the electrode assembly. The secondary battery may include the battery case accommodating the electrode assembly and the electrolyte solution, and the battery case may include, without limitation, any appropriate type of battery case commonly used in the corresponding technical field, for example, a pouch type or a metal can type. The battery is not limited to a particular type and may come in various types, for example, cylindrical, stack-type, coin-type batteries.

### Electrolyte

In the present disclosure, the electrolyte may include the organic solvent and the lithium salt.

### Organic solvent

The organic solvent acts as a medium for the movement of ions involved in the electrochemical reaction of the battery. The organic solvent may include any organic solvent commonly used in electrolyte solutions of lithium secondary batteries without limitation, and for example, may include ether, ester, amide, linear carbonate and cyclic carbonate, used singly or in combination. The organic solvent may typically include an ether-based compound.

The ether-based compound may include an acyclic ether or a cyclic ether.

For example, the acyclic ether may be at least one selected from the group consisting of dimethyl ether, diethyl ether, dipropyl ether, methylethyl ether, methylpropyl ether, ethylpropyl ether, dimethoxy ethane, diethoxy ethane, ethylene glycol ethylmethyl ether, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, and polyethylene glycol methylethyl ether.

For example, the cyclic ether may be at least one selected from the group consisting of 1,3-dioxolane, 4,5-dimethyl-dioxolane, 4,5-diethyl-dioxolane, 4-methyl -1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2 -vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene and isosorbide dimethyl ether, furan, 2-methyl furan, 3-methyl furan, 2-ethyl furan, 2-butyl furan, 2,3-dimethylfuran, 2,4-dimethylfuran, 2,5-dimethyl furan, pyran, 2-methylpyran, 3-methylpyran, 4-methylpyran, benzofuran, 2-(2-nitrovinyl)furan, thiophene, 2-methyl thiophene, 2-ethyl thiophene, 2-propyl thiophene, 2-butyl thiophene, 2,3-dimethyl thiophene, 2,4-dimethyl thiophene, 2,5-dimethyl thiophene, but is not limited thereto.

Examples of the ester of the organic solvent may include any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone, ε-caprolactone and a mixture thereof, but is not limited thereto.

Specific examples of the linear carbonate compound may typically include any one selected from the group consisting of dimethyl carbonate (DMC), diethyl carbonate (DEC), dipropyl carbonate, ethylmethyl carbonate (EMC), methylpropyl carbonate and ethylpropyl carbonate, or a mixture thereof, but is not limited thereto.

Additionally, specific examples of the cyclic carbonate compound may include ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate and halides thereof, or a mixture thereof. Examples of the halides may include fluoroethylene carbonate (FEC), but is not limited thereto.

### Lithium salt

The lithium salt is a compound that provides lithium ions in the electrolyte. The lithium salt may include LiPF₆, LiClO₄, LiAsF₆, LiBF₄, LiSbF₆, LiAlO₄, LiAlCl₄, LiCF₃CO₂, LiCF₃SO₃, LiC₄F₉SO₃, LiN(C₂F₅SO₃)₂, LiCH₃SO₃, LiN(C₂F₅SO₂)₂, LiN(CF₃SO₂)₂, LiC₄BO₈, LiCl, LiBr, LiB₁₀Cl₁₀, LiI or LiB(C₂O₄)₂. In the present disclosure, in terms of high sulfur availability, high capacity and high voltage of the battery, the lithium salt preferably includes Li-TFSI. More preferably, the lithium salt may include LiN(CF₃SO₂)₂ (Li-TFSI) in an amount of 80 wt% or more, or 90 wt% or more or 100% based on the total 100 wt% of the lithium salt.

The concentration of the lithium salt is in a range between 0.1 and 2.0 M, preferably between 0.5 and 1M, and more preferably between 0.5 and 0.75M. When the concentration of the lithium salt is included in the above-described range, the electrolyte may have proper conductivity and viscosity and exhibit the outstanding electrolyte performance, thereby achieving effective transport of lithium ions. When the concentration of the lithium salt is below the above-described range, it may be difficult to ensure the suitable ionic conductivity for the operation of the battery, and when the concentration of the lithium salt is above the above-described range, the viscosity of the electrolyte may increase, the mobility of lithium ions may reduce or the decomposition reaction of the lithium salt itself may increase, and as a consequence, the performance of the battery may degrade.

In a specific embodiment of the present disclosure, in the electrolyte including a first solvent, a second solvent and the lithium salt, a mole ratio of the lithium salt, the second solvent and the first solvent may be 1 : 0.5 to 3 : 4.1 to 15. Additionally, in an embodiment of the present disclosure, the mole ratio of the lithium salt, the second solvent and the first solvent may be 1 : 2 : 4 to 13 or 1 : 3 : 3 to 10 or 1 : 4 : 5 to 10. In the electrolyte included in the lithium-sulfur battery of the present disclosure, the first solvent including a fluorinated ether compound may be included in a larger amount than the second solvent including a glyme-based compound.

### Additive

In addition to the above-described constituent substances of the electrolyte, the electrolyte may further include an additive to improve the life characteristics of the battery, prevent the capacity fading of the battery and improve the discharge capacity of the battery. For example, the additive may include a nitric acid compound, a nitrous acid compound, a haloalkylene carbonate-based compound such as difluoro ethylene carbonate, pyridine, triethylphosphite, triethanolamine, cyclic ether, ethylene diamine, n-glyme, hexamethylphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol or aluminum trichloride, used singly or in combination. The additive may be included in an amount of 0.1 to 10 wt%, and preferably 0.1 to 5 wt% based on the total weight of the electrolyte.

In a specific embodiment of the present disclosure, the electrolyte may include the nitric acid compound and/or the nitrous acid compound as the additive. The nitric acid compound/nitrous acid compound may be used to form a stable coating on the negative electrode of lithium metal and improve charge · discharge efficiency. The nitric acid or nitrous acid compound may include at least one selected from the group consisting of inorganic nitric acid or nitrous acid compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₃), cesium nitrite (CsNO₂), ammonium nitrite (NH₄NO₂); organic nitric acid or nitrous acid compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; organic nitro compounds such as nitromethane, nitropropane, nitrobutane, nitrobenzene, dinitrobenzene, nitropyridine, dinitropyridine, nitrotoluene, dinitrotoluene and a combination thereof, but is not limited thereto. In an exemplary embodiment of the present disclosure, the additive may include lithium nitrate.

Hereinafter, embodiments will be described in detail to provide a detailed description of the present disclosure. However, the embodiments according to the present disclosure may be modified in many other forms, and the scope of the present disclosure should not be interpreted as being limited to the above-described embodiments. The embodiments of the present disclosure are provided to explain the present disclosure to persons having ordinary skill in the technical field pertaining to the present disclosure fully and thoroughly.

### <Example>

### (Preparation of preliminary electrode)

Carbon nanotubes and sulfur were uniformly mixed and placed in an oven of 155°C for 30 minutes to manufacture a sulfur-carbon composite. The sulfur content was 75 wt% based on 100 wt% of the sulfur-carbon composite. 90 wt% of the sulfur-carbon composite, 5 wt% of denka black and 5 wt% of a binder (styrene butadiene rubber/carboxymethylcellulose, 7:3 weight ratio) were mixed to prepare a positive electrode slurry. The solids concentration in the slurry was 25 wt%. The slurry was coated on two surfaces of a 20 µm thick aluminum current collector, dried at 50°C for 12 hours and compressed using a roll press to manufacture a positive electrode. The loading amount of the positive electrode active material (electrode area basis) was 2.5 to 2.7 mAh/cm², and the porosity was 70 to 83 vol%.

For a negative electrode, a 60 µm thick lithium foil was prepared.

For an electrolyte, a mixed solution was used in which 1M of lithium bis(trifluoromethanesulfonyl)imide (LiTFSI) and 1 wt% of lithium nitrate (LiNO₃) were dissolved in an organic solvent of 1, 3-dioxolane and dimethyl ether (DOL:DME=1:1 (volume ratio)).

The positive electrode and the negative electrode were placed with a separator interposed between, wherein the separator is a polyethylene porous film having a thickness of 16 µm and a porosity of 68%, and they were placed in a pouch, followed by injection of the prepared electrolyte and sealing to prepare a preliminary electrode. In the battery, a total 7 sheets of positive electrodes and a total 8 sheets of negative electrodes were stacked and folded with separators interposed between them.

### Example

The as-prepared preliminary electrode was placed on a jig and the pressure of about 7 atm was applied. Subsequently, discharging was performed in a CC-CV mode using a PNE-0506 charger/discharger (manufacturer: PNE solution). The CC discharging was performed at 0.5C, and after the end-of-discharge voltage of 1.8V is reached, the CV mode was maintained for about 4 hours until the end-of-discharge current of 0 mAh is reached.

### Comparative Example

The as-prepared preliminary electrode was placed on a jig and the pressure of about 7 atm was applied. Subsequently, discharging was performed at 0.5C to 1.7V in a CC mode using a PNE-0506 charger/discharger (manufacturer: PNE solution) and then charging was performed at 0.3C to 2.5V in a CC mode, and this process repeated 6 times.

### Evaluation of life characteristics

In each of Example and Comparative Example, the life characteristics of the activated, completed battery were evaluated using a PNE-0506 charger/discharger (manufacturer: PNE solution). Each battery was charged at 0.3C to 2.5V in a CC mode and discharged at 1C to 1.7 V in a CC mode and the charging and discharging process repeated until the capacity reaches 80% based on 100% of the first cycle discharge capacity.

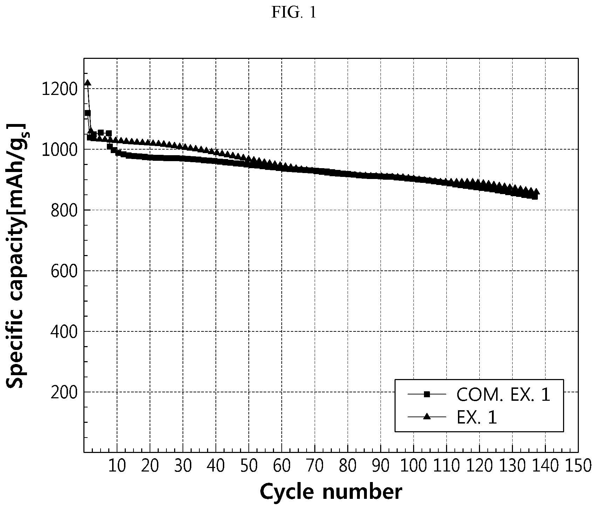

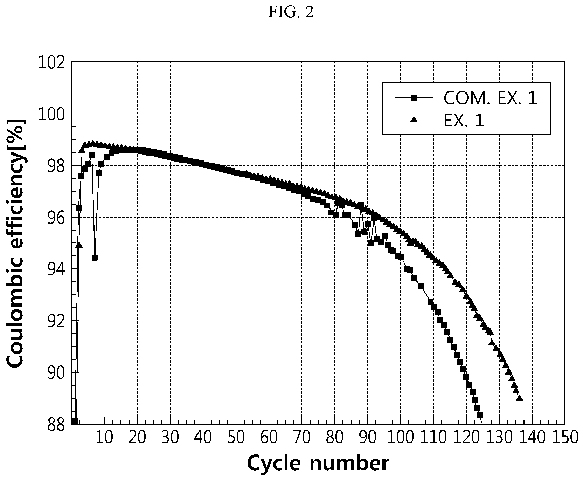

FIG. 1 shows the comparison of specific capacity of each battery at the discharge rate of 1C, and FIG. 2 shows Coulombic efficiency characteristics. According to FIGs. 1 and 2, it was confirmed that Example and Comparative Example had similar specific capacity at similar charge and discharge cycles, but Example had higher Coulombic efficiency.

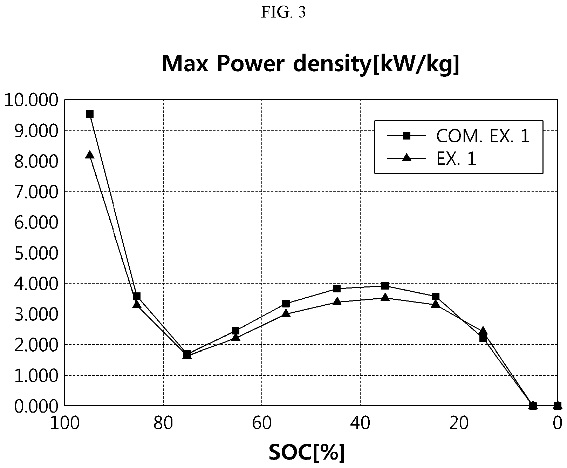

Meanwhile, FIG. 3 shows the output density as a function of state of charge (SOC) range. The output density as a function of SOC range shows output measurements at SOC 95% to 15% by 10%. When each specific SOC is reached, for example, SOC 95%, 85%, 75%, 65%, 55%, 45%, 35%, 25% and 15%, a 5C pulsed current was applied for 10 seconds in the direction of discharge, and was converted to a voltage value to calculate the output density (kW/kg). This may be an indicator that stands for the level of overvoltage when the pulsed current was applied to each battery. Subsequently, after a 1-minute rest, charging was performed again at 0.1C up to SOC 100%, and the charge current was applied at 0.3C for 10 seconds, and during the measurements, this process repeated when the next specific SOC on the basis of the initial discharge is reached. The lithium-sulfur battery showed the lowest voltage at SOC 75% and at this range, overvoltage was at maximum, so it is a crucial range in the determination of the battery performance. According to FIG. 3, it was confirmed that at SOC 75%, Example and Comparative Example showed the equal level of output density, and also at the other ranges, Example and Comparative Example showed almost the equal level. Accordingly, the battery manufacturing method of the present disclosure achieves the equal level of output density to the existing technology, and compared to the existing technology, reduces the charge and discharge cycles in the activation process, thereby reducing the time required to perform the battery manufacturing process, resulting in high procedural efficiency.

## Claims

1. A method for manufacturing a lithium-sulfur battery, comprising:
(S10) manufacturing a preliminary electrode including an electrode assembly and an electrolyte; and
(S20) activating the preliminary electrode,
wherein the electrode assembly includes a positive electrode, a negative electrode and a separator between the positive electrode and the negative electrode, and the positive electrode includes a positive electrode active material including sulfur,
wherein in the (S10), the electrode assembly gets wet by the electrolyte, and
wherein the (S20) comprises discharging the preliminary electrode, and the discharging is performed by constant current (CC) discharging and constant voltage (CV) discharging in a sequential order.

2. The method for manufacturing the lithium-sulfur battery according to claim 1, wherein the constant current (CC) discharging in the (S20) is performed until a preset end-of-discharge voltage is reached, and the end-of-discharge voltage is set in a range between 1.3V and 1.8V.

3. The method for manufacturing the lithium-sulfur battery according to claim 2, wherein the constant current (CC) discharging in the (S20) is performed at a C-rate set in a range between 0.05 and 2 until the preset end-of-discharge voltage is reached.

4. The method for manufacturing the lithium-sulfur battery according to claim 2, wherein the constant voltage (CV) discharging is performed until a remaining current of the battery reaches 0 mAh at the preset end-of-discharge voltage.

5. The method for manufacturing the lithium-sulfur battery according to claim 1, wherein before the (S20) is performed, the preliminary electrode is uncharged and undischarged, and the (S20) comprises applying initial discharging to the preliminary electrode.

6. The method for manufacturing the lithium-sulfur battery according to claim 2, wherein before the (S20) is performed, the preliminary electrode is uncharged and undischarged, and the (S20) comprises discharging the preliminary electrode only one time.

7. The method for manufacturing the lithium-sulfur battery according to claim 1, wherein, the discharging in the (S20) is performed less than six times.

8. The method for manufacturing the lithium-sulfur battery according to claim 1, wherein the constant current (CC) discharging in the (S20) is performed at a C-rate in a range between 0.05 and 2.00.

9. The method for manufacturing the lithium-sulfur battery according to claim 1, wherein the discharging in the (S20) is performed in a constant current (CC) mode until the preset end-of-discharge voltage.

10. The method for manufacturing the lithium-sulfur battery according to claim 1, wherein the discharging in the (S20) is performed at a C-rate in a range between 0.50 to 1.00.

11. The method for manufacturing the lithium-sulfur battery according to claim 1, wherein the (S20) is performed in an environment in which the preliminary electrode is subjected to pressure.

12. The method for manufacturing the lithium-sulfur battery according to claim 11, wherein the pressure applied is equal to or higher than an atmospheric pressure.

13. The method for manufacturing the lithium-sulfur battery according to claim 1, wherein the (S20) is performed at a temperature in a range between 15°C and 40°C.

14. The method for manufacturing the lithium-sulfur battery according to claim 1, further comprising:
after the (S10) is performed and before the (S20) is performed,
aging by keeping the preliminary electrode under an atmosphere of from 15°C to 40°C.

15. The method for manufacturing the lithium-sulfur battery according to claim 1, wherein the (S20) comprises charging between the discharging and the discharging, and the charging is performed by constant current (CC) charging and constant voltage charging (CV) in a sequential order.
